# EUROPÄISCHE PATENTSCHRIFT

(11) **EP 2 496 875 B1**
(45) Veröffentlichungstag und Bekanntmachung des Hinweises auf die Patenterteilung: **09.01.2019**
(21) Anmeldenummer: 09749114.6
(22) Anmeldetag: 06.11.2009
(51) Int. Cl.: F16N 29/04, F16N 25/00, F16N 7/38

(54) **SCHMIERSTOFFVERTEILER**
LUBRICANT DISTRIBUTOR
DISTRIBUTEUR DE LUBRIFIANT

(43) Veröffentlichungstag der Anmeldung: 12.09.2012
(73) Patentinhaber: Baier & Köppel GmbH & Co., 91257 Pegnitz (DE)
(72) Erfinder: BRENDEL, Jürgen, 91278 Pottenstein (DE)
(74) Vertreter: Zech, Stefan Markus
(86) Internationale Anmeldenummer: PCT/EP2009/064765
(87) Internationale Veröffentlichungsnummer: WO 2011/054395

(56) Entgegenhaltungen:
- DE-U1-202008 007 080
- GB-A- 1 405 494
- US-A- 3 064 759
- US-A- 4 732 190

## Beschreibung

Die Erfindung betrifft einen Schmierstoffverteiler, insbesondere zur Verwendung in Zentralschmieranlagen für Maschinen, Fahrzeuge, Bau- oder Landmaschinen zum Fördern und Verteilen von Schmierstoff aus einer Schmierstoffquelle über ein oder mehrere Leitungen an vorbestimmte Schmierstoffabnahmestellen nach dem Oberbegriff des Anspruchs 1.

Bei Zentralschmieranlagen tritt häufig das Problem auf, dass aufgrund eines weitverzweigten Leitungsnetzes der Bruch einer Leitung oftmals schwer feststellbar bzw. lokalisierbar ist. Bei Zentralschmieranlagen, die einen oder mehrere Progressivverteiler aufweisen, besteht darüber hinaus das Problem, dass bei einem Leitungsbruch abstromseitig des Progressivverteilers die progressive (fortschreitende) Betätigung der Dosierkolben durch den Druckabfall in der gebrochenen Leitung unterbrochen wird, so dass ein Rückstau von Schmierstoff entsteht, jedenfalls die weiteren vom Progressivverteiler abgehenden Leitungen nicht mehr mit Schmierstoff versorgt werden und so gravierende Folgeschäden auftreten können.

Ein Leitungsbruchwächter, der einen Rückstau von Schmierstoff im Falle eines Leitungsbruches hervorruft, ist bereits aus der US 3,064,759 A bekannt. Dort wird bei einem Druckabfall der Ausgangsanschluss komplett durch einen beweglich gelagerten Abtastkolben gesperrt. Der dort gezeigte Abtastkolben hat damit gleichzeitig drei Funktionen, nämlich den Druckausgangsanschluss abzutasten, den Ausgangsanschluss zu sperren, wenn der Druck unterhalb eines von einer Feder vorgegebenen Gegendrucks fällt und schließlich die Absperrung der Ausgangsleitung von außen her durch ein dann weniger hoch vorstehendes Endstück erkennbar zu machen.

Auch die GB 1 405 494 offenbart einen Leitungsbruchwächter nach den Prinzipien eines beweglich gelagerten Abtastkolbens. Hier wird der Differenzdruck zwischen einer Hauptleitung und der zu überwachenden Ausgangsleitung überwacht. Wird der Differenzdruck größer als ein vorgegebener Stellenwert, verschiebt sich der Abtastkolben und es wird eine Leckageöffnung geöffnet, so dass der Austritt von Schmierstoff von außen detektiert werden kann.

Oft ist ein Rückstau von Schmierstoff, wie oben ausgeführt, die Folge eines Leitungsbruchs, wenn ein Progressivverteiler oder eine ähnliche Anordnung zwischengeschaltet ist. Die Unterbrechung der Schmierstoffzufuhr zu einer Schmierstelle kann schwerwiegende Folgen haben, insbesondere wenn sich zu schmierende Maschinenteile, beispielsweise bei Landmaschinen "ineinanderfressen", wodurch ein erheblicher Schaden an der gesamten Maschine entstehen kann, der auch für den Bediener der Maschine mit erheblichen Gefahren verbunden sein kann.

Aus der DE 103 18 671 ist eine Zentralschmieranlage mit einem Schmierstoffverteiler der hier angesprochenen Art bekannt. Weiterhin ist es aus dieser Druckschrift bekannt, zur Detektion eines Leitungsbruchs Leitungsbruchwächter einzusetzen, die als Drucksensoren ausgebildet und in zugeordneten Leitungen angeordnet sind. Diese Lösung zur Überwachung von Leitungsbrüchen weist jedoch den Nachteil auf, dass sie mit hohen Kosten verbunden ist und nur mit relativ hohem Aufwand realisierbar ist. Weitere Beispiele für Schmierstoffverteileranlagen mit Druckwächtermodulen sind aus der US 4,732,190 und der DE 20 2008 007 080 U1 bekannt.

Aufgabe der vorliegenden Erfindung ist es daher, eine Leitungsüberwachung in einer Zentralschmieranlage zu schaffen, die besonders einfach und kostengünstig realisierbar ist.

Zur Lösung dieser Aufgabe wird ein Schmierstoffverteiler mit den Merkmalen des Anspruchs 1 vorgeschlagen, der insbesondere zur Verwendung in Zentralschmieranlagen für Maschinen, Fahrzeuge, Bau- oder Landmaschinen zum Fördern und Verteilen von Schmierstoff aus einer Schmierstoffquelle über ein oder mehrere Leitungen an vorbestimmte Schmierstoffabnahmestellen dient. Der Schmierstoffverteiler weist einen Grundverteiler auf sowie mindestens einen Leitungsbruchwächter zur Detektion eines Druckabfalls in wenigstens einer zugeordneten Leitung, wobei der Leitungsbruchwächter baulich in oder an dem Grundverteiler angeordnet ist, um eine starre Einheit umfassend den Grundverteiler und den Leitungsbruchwächter zu schaffen. Der mindestens eine Leitungsbruchwächter umfasst wenigstens ein Leitungsbruchwächtermodul, wobei das Leitungsbruchwächtermodul in Wirkverbindung mit einem Anschlusselement steht, das einem Verteilerausgang des Grundverteilers (2) zugeordnet ist. Der Leitungsbruchwächter weist wenigstens eine Detektionseinrichtung auf, wobei die Detektionseinrichtung dazu ausgebildet und eingerichtet ist, unter Einsatz elektrischer und/oder optischer Komponenten einen Druckabfall in einem Anschlusselement zu detektieren. Das Anschlusselement ist so ausgebildet, dass der Schmierstoff aus dem Verteilerausgang heraus über einen Umleitungsfluidpfad geleitet wird, wobei der Umleitungsfluidpfad gebildet ist durch eine Öffnung in der Wandung des Anschlusselements, sowie einen Bohrungsabschnitt und eine Entlastungsbohrung in dem Leitungsbruchwächtermodul, wobei der Bohrungsabschnitt an einem Ende mit der Öffnung in Fluidverbindung steht und an dem anderen Ende mit der Entlastungsbohrung (30) verbunden ist.

Diese Anordnung weist den Vorteil auf, dass der Leitungsbruchwächter besonders einfach und kostengünstig realisierbar ist, indem der Leitungsbruchwächter einfach baulich in oder an dem Grundverteiler angeordnet ist und so eine kompakte Einheit bildet. Der Schmierstoffverteiler gemäß der vorliegenden Erfindung ist darüber hinaus besonders flexibel einsetzbar.

Der Leitungsbruchwächter kann einstückig mit dem Grundverteiler verbunden sein. Vorzugsweise ist jedoch vorgesehen, dass der Leitungsbruchwächter mit dem Grundverteiler lösbar verbindbar ist.

Der Schmierstoffverteiler, insbesondere Progressivverteiler, zeichnet sich dadurch aus, dass der mindestens eine Leitungsbruchwächter ein oder mehrere Leitungsbruchwächtermodule umfasst. Weiterhin sind ein oder mehrere Leitungsbruchwächtermodule vorzugsweise hinzufügbar, entfernbar oder auswechselbar, sodass der Leitungsbruchwächter sehr flexibel einsetzbar ist und insbesondere mit nahezu jedem Grundverteiler zusammenwirken kann. Außerdem kann der Leitungsbruchwächter durch den vorteilhaften modularen Aufbau eine beliebige Anzahl an Leitungsbruchwächtermodulen aufweisen, wobei der Leitungsbruchwächter jederzeit veränderbar und dadurch beispielsweise an andere Grundverteiler anpassbar ist.

Die Leitungsbruchwächtermodule sind vorzugsweise scheibenförmig ausgebildet, wobei also die Breite und/oder Länge eines Leitungsbruchwächtermoduls seine Dicke wesentlich übersteigt. Auf diese Weise sind sie besonders gut für die Verwendung mit modular ausgebildeten Grundverteilern geeignet. Darüber hinaus ist der scheibenförmige Aufbau eines Leitungsbruchwächtermoduls vorteilhaft, da die Ausgänge des Grundverteilers, mit dem die Leitungsbruchwächtermodule vorzugsweise zusammenwirken, nur einen begrenzten Abstand zueinander aufweisen. Weiterhin bevorzugt wird ein Schmierstoffverteiler, bei dem ein Leitungsbruchwächter ein oder mehrere Leitungsbruchwächtermodule aufweist, von denen wenigstens eines ein Leermodul ist. Auf diese Weise können funktionsfähige Leitungsbruchwächtermodule, also keine Leermodule, besonders wichtige Schmierstellen überwachen, während unkritischere Schmierstellen nicht überwacht werden. Die entsprechenden Verteilerausgänge des Grundverteilers, die unwichtigen Schmierstellen zugeordnet sind, können dann mit entsprechenden Leermodulen besetzt werden.

Weiterhin steht der Leitungsbruchwächter oder ein Leitungsbruchwächtermodul in Wirkverbindung mit einem Anschlusselement, das einem Verteilerausgang des Grundverteilers zugeordnet ist. Sofern der Leitungsbruchwächter mehrere Leitungsbruchwächtermodule umfasst, stehen diese vorzugsweise alle in Wirkverbindung mit jeweils einem Anschlusselement, die jeweils einem bestimmten Verteilerausgang des Grundverteilers zugeordnet sind. Durch diese Anordnung ist der Schmierstoffverteiler besonders einfach realisierbar. Weiterhin sind durch diese Ausgestaltung bestehende Grundverteiler einfach mit einem Leitungsbruchwächter nachrüstbar.

Schließlich wird noch ein Schmierstoffverteiler bevorzugt, bei dem ein Leitungsbruchwächter bzw. ein Leitungsbruchwächtermodul einen in einer Bohrung beweglich gelagerten Abtastkolben umfasst. Der Abtastkolben ist in der Bohrung vorzugsweise federgelagert, so dass der Abtastkolben in der Bohrung gegen die Kraft der Feder verlagerbar ist. Die Position des Abtastkolbens in der Bohrung hängt im Übrigen von dem Fluiddruck in einem zugeordneten Anschlusselement ab. Der Abtastkolben wirkt vorzugsweise durch geeignete Mittel mit einer Detektionseinrichtung zusammen, die einen Druckabfall in einem zugeordneten Anschlusselement detektiert. Die Detektionseinrichtung weist vorzugsweise durch elektrische und/oder optische Komponenten auf.

Obwohl der Schmierstoffkolben in einem endseitig verschlossenen Abzweigstück eines Schmierstoffkanals angeordnet sein kann, wird es bevorzugt, wenn der Abtastkolben derart positioniert ist, dass er seitlich an einem von Schmierstoff durchflossenen Kanal den Schmierstoffdruck abtastet, derart, dass ein beständiger Schmierstoffaustausch an der Stirnseite des Abtastkolbens sichergestellt ist.

Zur Lösung der oben genannten Aufgabe wird außerdem eine Zentralschmieranlage vorgeschlagen, die einen Schmierstoffverteiler gemäß der Erfindung umfasst.

Die Erfindung wird im Folgenden anhand der Zeichnung näher erläutert. Es zeigen:
- Fig. 1: eine erste perspektivische Darstellung eines Schmierstoffverteilers gemäß der Erfindung;
- Fig. 2: eine zweite perspektivische Darstellung des Schmierstoffverteilers gemäß der Erfindung;
- Fig. 3: einen Querschnitt durch den Schmierstoffverteiler;
- Fig. 3a: eine vergrößerte Darstellung eines Teilbereichs der Fig. 3;
- Fig. 4: eine Draufsicht auf den Schmierstoffverteiler;
- Fig. 5: einen Längsschnitt durch den Schmierstoffverteiler;
- Fig. 6: eine Explosionsdarstellung eines Leitungsbruchwächters gemäß der Erfindung, und
- Fig. 7: ein Schmierstoffverteilersystem mit mehreren Schmierstoffverteilern.

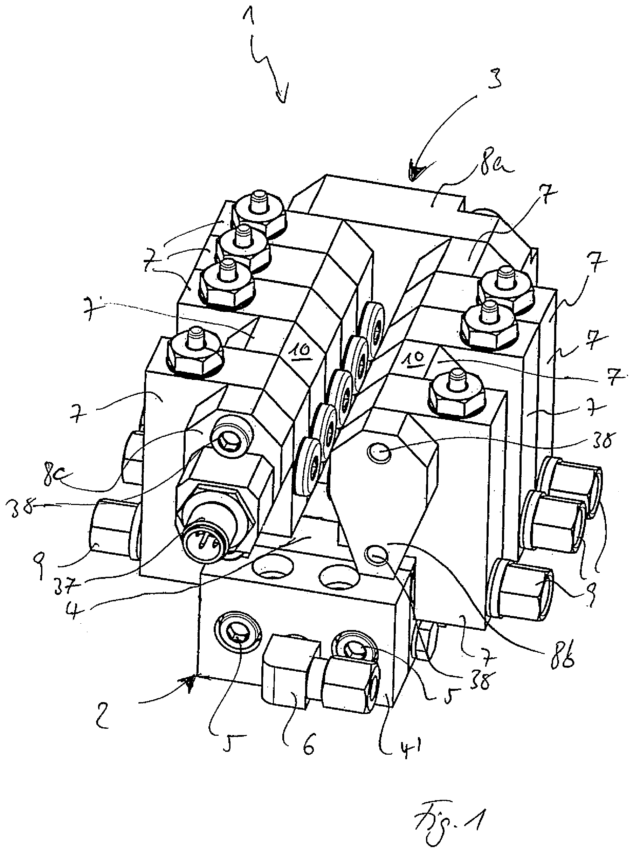

Fig. 1 zeigt eine perspektivische Darstellung eines Schmierstoffverteiler 1 gemäß der vorliegenden Erfindung. Der Schmierstoffverteiler 1 umfasst einen Grundverteiler 2 und einen Leitungsbruchwächter 3. Bei dem Grundverteiler 2 kann es sich beispielsweise um einen bekannten Progressivverteiler handeln, grundsätzlich kann der Grundverteiler 2 jedoch beliebig ausgebildet sein. Der Grundverteiler 2 umfasst mehrere Verteilerausgänge, die hier nicht erkennbar sind, von denen aus ein Fluid, insbesondere ein Schmiermittel, zu den Schmierstellen über entsprechende Leitungen gefördert wird, die hier ebenfalls nicht dargestellt sind.

Der Grundverteiler 2 ist in der Fig. 1 rein beispielhaft modular ausgebildet, umfasst also mehrere Grundverteilermodule 4, die über Verbindungselemente 5, insbesondere über Innensechskantschrauben miteinander verbunden sind. Die Ausbildung des Grundverteilers 2 in variabler Scheibenbauweise hat den Vorteil, dass der Grundverteiler 2 je nach Anzahl der zu versorgenden Schmierstellen beliebig erweitert oder verkürzt werden kann. Der Grundverteiler 2 weist darüber hinaus in einem Anfangsmodul 4' einen Verteilereingang auf, in dem ein Einlasselement 6 angeordnet ist, welches Schmierstoff von einer hier nicht gezeigten Schmierstoffquelle erhält.

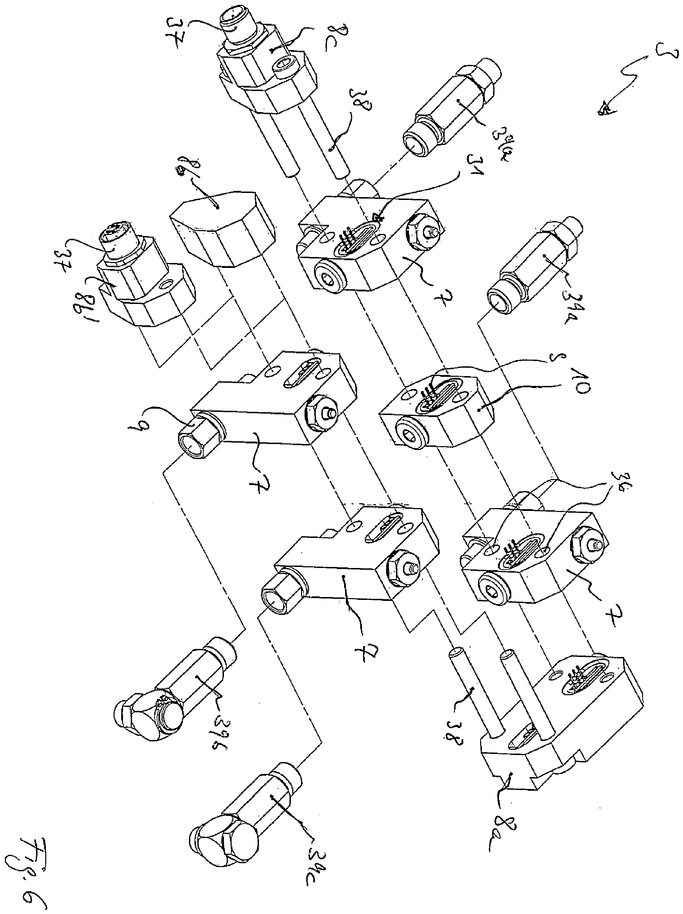

Der Leitungsbruchwächter 3, der Teil des Schmierstoffverteilers 1 ist, umfasst in dem Ausführungsbeispiel nach Fig. 1 mehrere Leitungsbruchwächtermodule 7, die an dem Grundverteiler 2 angeordnet sind. Prinzipiell ist es jedoch auch denkbar, den Leitungsbruchwächter 3 in dem Grundverteiler anzuordnen. Die Leitungsbruchwächtermodule 7 werden durch Endstücke zusammengehalten, von denen hier insgesamt drei vorgesehen sind. Das Endstück 8a dient zum Verbinden der beiden "Reihen" von Leitungsbruchwächtermodulen 7, die sich auf beiden Seiten des Grundverteilers 2 erstrecken. Das Endstück 8b begrenzt eine Reihe von mehreren Leitungsbruchwächtermodulen 7 auf der dem Endstück 8a gegenüberliegenden Seite. Das Endstück 8c dient einerseits ebenfalls zur Begrenzung einer Reihe von mehreren Leitungsbruchwächtermodulen 7 auf der dem Endstück 8a gegenüberliegenden Seite und andererseits dazu, eine Verbindung zu mindestens einem weiteren Leitungsbruchwächter 3 und/oder zu einer Auswerteinrichtung herzustellen. Insgesamt sind in der Ausführungsform gemäß Fig. 1 zehn Leitungsbruchwächtermodule 7 vorgesehen, die mittels geeigneter Verbindungsmittel miteinander verbunden sind. Auf die Verbindung der einzelnen Leitungsbruchwächtermodule 7 und auf die Verbindung mehrerer Leitungsbruchwächter 3 wird in der Beschreibung zu Fig. 6 noch näher eingegangen.

Einem Leitungsbruchwächtermodul 7 ist jeweils ein Anschlusselement 9 zugeordnet, wobei jedes Anschlusselement 9 wiederum einem der hier nicht erkennbaren Verteilerausgänge des Grundverteilers zugeordnet ist. Vorzugsweise ist vorgesehen, dass jedes Grundverteilermodul 4 zwei gegenüberliegende Verteilerausgänge aufweist, so dass also jedem Grundverteilermodul 4 zwei Anschlusselemente 9 und zwei Leitungsbruchwächtermodule 7 zugeordnet sind.

Fig. 1 macht noch deutlich, dass zwei von den insgesamt zehn dargestellten Leitungsbruchwächtermodulen 7 als Leermodule 10 ausgebildet sind, die im Gegensatz zu den übrigen acht Leitungsbruchwächtermodulen 7 keine Überwachungsfunktion aufweisen, die also einen Leitungsbruch in einer zugeordneten Leitung nicht detektieren können und als "Lückenfüller" insbesondere zur Daten- und/oder Energieübertragung dienen, wie später noch deutlich wird.

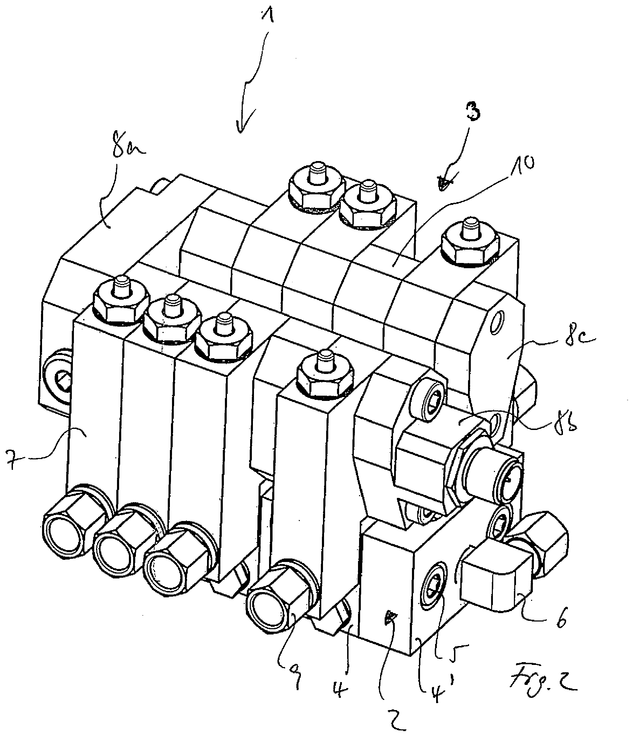

Fig. 2 zeigt eine zweite perspektivische Darstellung des Schmierstoffverteilers 1 aus einer anderen Blickrichtung. Um Wiederholungen zu vermeiden, sind gleiche Teile mit gleichen Bezugszeichen versehen, so dass insofern auf die Beschreibung zur Fig. 1 verwiesen wird.

In Fig. 2 ist wiederum der Grundverteiler 2 und die insgesamt zehn Leitungsbruchwächtermodule 7 erkennbar. Darüber hinaus sind die Endstücke 8a, 8b und 8c erkennbar, welche die Leitungsbruchwächtermodule 7 begrenzen bzw. diese miteinander verbinden. Darüber hinaus erkennbar sind auch die Anschlusselemente 9, die mit den Leitungsbruchwächtermodulen 7 in Verbindung stehen.

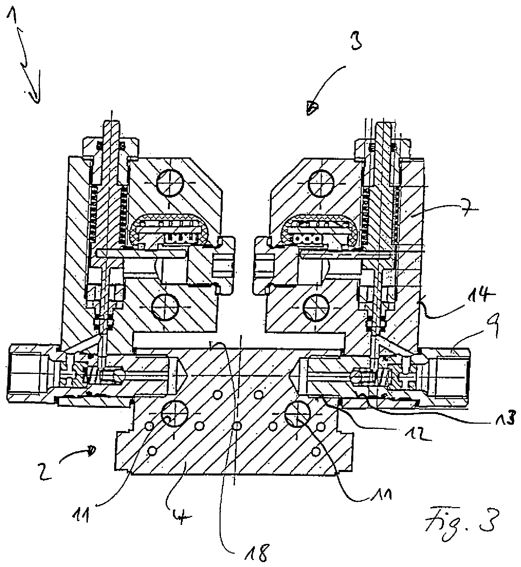

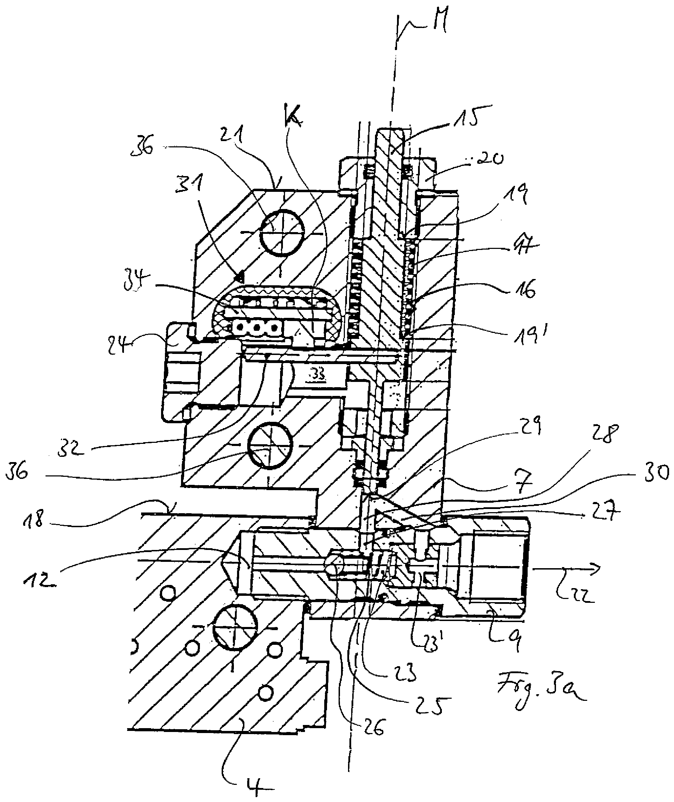

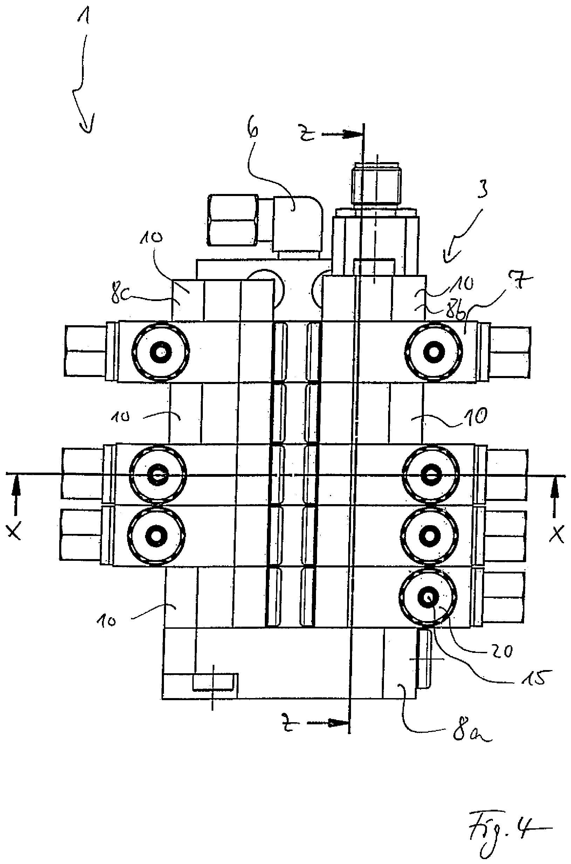

Fig. 3 zeigt einen Querschnitt entlang der in Fig. 4 gezeigten Schnittlinie X-X durch einen Schmierstoffverteiler 1 gemäß der Erfindung. Gleiche Teile sind mit gleichen Bezugszeichen versehen, so dass insofern auf die Beschreibung zu den vorangegangenen Figuren verwiesen wird, um Wiederholungen zu vermeiden.

In Fig. 3 erkennbar ist der Grundverteiler 2 bzw. ein Grundverteilermodul 4, welches Bohrungen 11 zur Aufnahme der in den Fig. 1 und 2 gezeigten Verbindungselemente 5 aufweist. Das Grundverteilermodul 4 weist einen Verteilerausgang 12 auf, in dem das Anschlusselement 9 angeordnet ist, um eine Fluidverbindung mit den zu versorgenden, hier nicht dargestellten Schmierstellen bereitzustellen. Das Anschlusselement 9 ist in dem hier gezeigten Beispiel in den Verteilerausgang 12 einschraubbar.

Das Leitungsbruchwächtermodul 7 weist eine Durchgangsbohrung 13 zur Aufnahme des Anschlusselements 9 auf. Das Anschlusselement 9 durchdringt also quasi das Leitungsbruchwächtermodul 7, wie im Übrigen auch in Fig. 2 erkennbar ist. Das Leitungsbruchwächtermodul 7 kann somit besonders einfach mit dem Grundverteilermodul 4 verbunden werden, indem das Anschlusselement 9 von einer Seitenfläche 14 des Leitungsbruchwächtermoduls 7 aus in die Durchgangsbohrung 13 eingeführt und das Anschlusselement 9 anschließend in den Verteilerausgang 12 eingeschraubt wird. Zur Abdichtung des Leitungsbruchwächtermoduls 7 gegenüber Grundverteilermodul 4 können O-Ringe oder dergleichen vorgesehen sein.

Für die detaillierte Beschreibung des in Fig. 3 gezeigten Leitungsbruchwächtermoduls 7 wird auf Fig. 3a Bezug genommen, in welcher ein Ausschnitt der Fig. 3 zur besseren Übersichtlichkeit vergrößert wiedergegeben ist. Gleiche Teile sind mit gleichen Bezugszeichen versehen, so dass insofern auf die Beschreibung zu den vorangegangenen Figuren verwiesen wird, um Wiederholungen zu vermeiden.

Das Leitungsbruchwächtermodul 7 umfasst einen Abtastkolben 15, der in einer Bohrung 16 gegen die Kraft eines elastischen Elements, hier beispielhaft gegen die Kraft einer Feder 17 verlagerbar ist. Die Mittelachse M der Bohrung 16 erstreckt sich vorzugsweise in einer Richtung, die senkrecht auf einer Ebene steht, in der die Oberseite 18 des Grundverteilers 2 angeordnet ist, wenn das Leitungsbruchwächtermodul 7 mit dem Grundverteiler 2 verbunden ist. Der Abtastkolben 15 weist einen Vorsprung 19 auf, der mit einem Anschlagelement 20 zusammenwirkt, welches im Bereich der Oberseite 21 des Leitungsbruchwächtermoduls 7 angeordnet ist. Der Abtastkolben 15 weist außerdem einen weiteren Vorsprung 19' auf, an dem sich die Feder 17 abstützt. Die Feder 17 liegt somit einerseits an dem Anschlagelement 20 und andererseits an dem Vorsprung 19' des Abtastkolbens 15 an und übt somit eine Kraft auf den Abtastkolben 15 in Richtung des Anschlusselements 9 aus.

Das Anschlusselement 9 umfasst vorzugsweise ein Rückschlagventil, welches nur dann ein Fluid in Richtung des Pfeils 22 zu der entsprechenden Schmierstelle leitet, wenn ausreichend Druck in dem Grundverteiler 2 bzw. in dem Verteilerausgang 12 vorhanden ist.

Die den Abtastkolben 15 aufnehmende Bohrung 16 steht mit einer Fluidkammer 23 des Anschlusselements 9 in Fluidverbindung. Die Fluidkammer 23 des Anschlusselements 9 steht wiederum in Fluidverbindung mit dem Verteilerausgang 12 des Grundverteilers 2, um ein Fluid, insbesondere ein Schmiermittel, aus dem Grundverteiler 2 über eine an dem Anschlusselement 9 angeschlossene Leitung zu den entsprechenden Schmierstellen zu leiten. Das Anschlusselement 9 umfasst wie gesagt vorzugsweise ein Rückschlagventil und weist ein gegen die Kraft eines elastischen Elements 25 verlagerbares Verschlusselement 26 auf.

Erst wenn der Fluiddruck des Schmiermittels in dem Verteilerausgang 12 eine vorbestimmte Größe erreicht, gibt das Verschlusselement 26 eine Fluidverbindung mit der Fluidkammer 23 des Anschlusselements 9 frei. Derartige Rückschlagventile sind im Stand der Technik vielfach beschrieben, so dass hier nicht näher darauf eingegangen wird. Das daraufhin in die Fluidkammer 23 gelangende Fluid kann dann über eine Öffnung 27 in der Wandung des Anschlusselements 9 in einen Bohrungsabschnitt 28 gelangen, wo es eine Kraft auf eine anschlussseitige Stirnseite 29 des Abtastkolbens 15 ausübt. Gegenüber der Bohrung 16 ist der Abtastkolben 15 mittels geeigneter Dichtungselemente abgedichtet, so dass kein Fluid von dem Bohrungsabschnitt 28 aus in die Bohrung 16 gelangen kann. Weiterhin ist eine Entlastungsbohrung 30 in dem Leitungsbruchwächtermodul 7 vorgesehen, die einerseits mit dem Bohrungsabschnitt 28 und andererseits mit einer Fluidkammer 23' verbunden ist und so ein Abfließen des Schmiermittels aus dem Bohrungsabschnitt 28 zurück in das Anschlusselement 9 erlaubt. Das Anschlusselement 9 ist vorzugsweise so ausgebildet, dass es keine direkte Verbindung zwischen dem Ventilausgang 12 und einer mit dem Anschlusselement 9 verbundenen Leitung herstellt. Vielmehr wird das Fluid von der Fluidkammer 23 aus über den Bohrungsabschnitt 28 und die Entlastungsbohrung 30, die zusammen quasi einen Umleitungsfluidpfad bilden, in die Fluidkammer 23' des Anschlusselements 9 zurückgeleitet. Das Fluid wird also vorzugsweise vollständig über den Umleitungsfluidpfad umgeleitet. Hierzu weist das Anschlusselement 9 entweder zwei Sacklochbohrungen auf, die ausgehend von beiden Stirnseiten in das Anschlusselement 9 eingebracht sind und die Fluidkammern 23 und 23' bilden, oder das Anschlusselement 9 ist mit einer Durchgangsbohrung versehen, in der ein Verschlussstopfen zwischen den anschlusselementseitigen Mündungen des Bohrungsabschnitts 28 und der Entlastungsbohrung 30 angeordnet ist. Denkbar ist es jedoch auch, das Fluid über den Bohrungsabschnitt 28 und die Entlastungsbohrung 30 lediglich parallel zu führen. Ein Fluidfluss durchströmt dann zusätzlich das Anschlusselement 9, welches in diesem Fall einen zweiten Fluidpfad ausbildet. Es versteht sich, dass die Position und Dimension der Öffnung 27 in der Wandung des Anschlusselements 9 und des Bohrungsabschnitts 28 derart aufeinander abgestimmt sein müssen, dass eine Fluidverbindung zwischen diesen beiden Elementen gewährleistet ist, wenn das Leitungsbruchwächtermodul an dem Grundverteiler 2 befestigt ist.

In Fig. 3 bzw. 3a ist der Abtastkolben 15 in einer "Normalposition" dargestellt, das heißt, in dem Anschlusselement 9 weist das Schmiermittel einen Normaldruck auf, der den Abtastkolben 15 gegen die Kraft der Feder 17 in eine erste Funktionsstellung drängt, in welcher der Abtastkolben vorzugsweise an dem Vorsprung 19 des Anschlagelements 20 anliegt. Unter "Normaldruck" ist dabei der Druck zu verstehen, der im störungsfreien Zustand in der Zentralschmieranlage herrscht.

Fig. 3a macht noch deutlich, dass das Leitungsbruchwächtermodul 7 eine Detektionseinrichtung 31 aufweist, die einen Druckabfall in dem Anschlusselement 9 bzw. in der zugeordneten Leitung anzeigt. Hierzu erfasst die Detektionseinrichtung 31 die axiale Position des Abtastkolbens 15 in der Bohrung 16 in Bezug auf die Mittelachse M. Zur Erfassung der Position des Abtastkolbens 15 weist dieser ein Radialelement 32 auf, welches sich in radialer Richtung des Abtastkolbens 15, also senkrecht zu der Mittelachse M, in einen Hohlraum 33 des Leitungsbruchwächtermoduls 7 hinein erstreckt, der mit der Bohrung 16 verbunden ist. Das Radialelement 32 kann beispielsweise wie in Fig. 3a dargestellt, in einer in den Abtastkolben 15 eingebrachten radialen Bohrung gelagert sein. Denkbar ist es jedoch auch, das Radialelement 32 mit dem Abtastkolben 15 zu verkleben, zu verschrauben oder dergleichen. Das Radialelement 32 kann auch einstückig mit dem Abtastkolben 15 ausgebildet sein. Der Hohlraum 33 ist insbesondere zu Wartungszwecken von außen zugänglich, wobei ein Verschluss 24 vorgesehen ist, der den Hohlraum 33 im Betrieb des Leitungsbruchwächtermoduls 7 verschließt.

In der "Normalposition" des Abtastkolbens 15 liegt das Radialelement 32 an einem Kontaktelement K an, welches beispielsweise als elektrischer Schalter oder dergleichen ausgebildet sein kann und mit einer entsprechenden Platine 34 in Verbindung steht. Die Platine kann beispielsweise mit einem elektrischen Schaltkreis versehen sein, der es ermöglicht, eine Berührung des Radialelements 32 und des Kontaktelements K, beispielsweise durch schließen eines elektrischen Schaltkreises zu detektieren und einem Bediener anzuzeigen. Entsprechend kann die Detektionseinrichtung 31 detektieren, wenn das Radialelement 32 das Kontaktelement K nicht berührt, der Abtastkolben 15 sich also in einer zweiten Funktionsstellung befindet.

Die zweite Funktionsstellung wird bei einer Verlagerung des Abtastkolbens 15 in der Bohrung 16 entlang der Mittelachse M in Richtung des Pfeils 35 eingenommen. Der Abtastkolben 15 wird insbesondere dann in der Bohrung 16 in Richtung des Anschlusselements 9 verlagert, wenn die Kraft der Feder 17 den auf die Stirnseite 29 des Abtastkolbens 15 ausgeübten Fluiddruck übersteigt. Dies kann beispielsweise dann der Fall sein, wenn eine zugeordnete Leitung gebrochen ist und die betroffene Leitung somit wenig oder kein Fluid mehr an die Schmierstelle liefert. Der für die "Normalposition" des Abtastkolbens 15 notwendige Druck in dem Anschlusselement 9 kann durch die Federkraft der Feder 17 eingestellt werden. Das Radialelement 32 steht in dieser zweiten Funktionsstellung des Abtastkolbens 15 nicht mehr mit dem Kontaktelement K in Kontakt, was durch die Detektionseinrichtung 31 erfasst werden kann, beispielsweise indem ein Schaltkreis geöffnet oder eine Lichtschranke unterbrochen wird.

Die Detektionseinrichtung 31 ist hier rein beispielhaft durch einen elektrischen Schaltkreis realisiert. Denkbar ist es jedoch auch, die Position des Abtastkolbens 15 bzw. des Radialelements 32 mittels eines Lasers, insbesondere einer Laserschranke mit entsprechenden Spiegelflächen oder dergleichen zu erfassen. Entscheidend ist, dass die Detektionseinrichtung 31 eine erste und eine zweite Funktionsstellung des Abtastkolbens 15 detektieren kann, wobei die zweite Funktionsstellung einen Druckabfall in der zugeordneten Leitung anzeigt. Vorzugsweise kann die Detektionseinrichtung 31 auch ein entsprechendes Signal erzeugen, das einem Bediener angezeigt werden kann.

In Fig. 3a sind noch zwei Bohrungen 36 erkennbar, die zur Aufnahme von Verbindungselementen dienen, wie in der Beschreibung zu Fig. 6 noch deutlich wird, um mehrere Leitungsbruchwächtermodule 7 miteinander zu verbinden.

Fig. 4 zeigt eine Draufsicht auf einen Schmierstoffverteiler 1 gemäß der Erfindung. Gleiche Teile sind mit gleichen Bezugszeichen versehen, so dass insofern auf die Beschreibung zu den vorangegangenen Figuren verwiesen wird, um Wiederholungen zu vermeiden.

Fig. 4 macht wiederum deutlich, dass der Schmierstoffverteiler 1 mehrere Leitungsbruchwächtermodule 7 umfasst, die auch als Leermodule 10 ausgebildet sein können. Die Leitungsbruchwächtermodule 7 bzw. 10 sind vorzugsweise nebeneinander angeordnet und stehen in Kontakt miteinander. In dem vorliegenden Ausführungsbeispiel eines Leitungsbruchwächters 3 sind insgesamt drei Elemente vorgesehen, welche die Endstücke 8a, 8b und 8c des Leitungsbruchwächters 3 bilden.

Es wird deutlich, dass vorzugsweise jedem Verteilerausgang 12 ein Leitungsbruchwächtermodul 7 zugeordnet ist. Allerdings können die zugeordneten Leitungsbruchwächtermodule 7 auch als Leermodule ausgebildet sein, die also lediglich als Lückenfüller zwischen zwei Leitungsbruchwächtermodulen 7 dienen, so dass die Leermodule 10 zumindest keinen Leitungsbruch anzeigen können.

Es versteht sich, dass der Leitungsbruchwächter 3 nicht aus einzelnen Leitungsbruchwächtermodulen 7 bestehen muss, vielmehr ist es auch denkbar, dass der Leitungsbruchwächter 3 einstückig ausgebildet ist, d.h. die Leitungsbruchwächtermodule 7 nicht austauschbar sind, sondern unlösbar miteinander verbunden sind. Vorzugsweise sind die Leitungsbruchwächtermodule 7 scheibenförmig ausgebildet, wobei die Breite eines Leitungsbruchwächtermoduls vorzugsweise der Breite eines Grundverteilermoduls 4 entspricht.

Jedes Leitungsbruchwächtermodul 7 weist vorzugsweise eine Detektionseinrichtung 31 auf. Besonders vorteilhaft ist es, wenn die Leermodule 10 entsprechende Mittel aufweisen, um eine elektrische und/oder optische Verbindung zwischen einzelnen funktionierenden Leitungsbruchwächtermodulen 7 zueinander herzustellen.

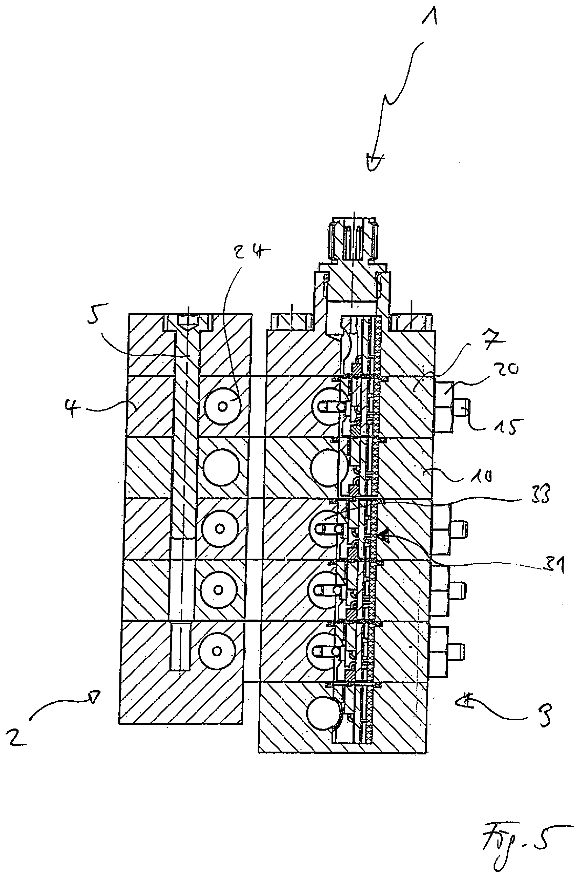

Fig. 5 zeigt einen Längsschnitt durch den Schmierstoffverteiler 1 gemäß der Erfindung entlang der in Fig. 4 gezeigten Schnittlinie Z-Z. Gleiche Teile sind mit gleichen Bezugszeichen versehen, so dass insofern auf die Beschreibung zu den vorangegangenen Figuren verwiesen wird, um Wiederholungen zu vermeiden.

Fig. 5 macht besonders deutlich, dass vorzugsweise jedem Grundverteilermodul 4 zwei Leitungsbruchwächtermodule 7 zugeordnet sind, wobei es sich bei den Leitungsbruchwächtermodule 7 auch um Leermodule 10 handeln kann. Denkbar ist es beispielsweise, nur denjenigen Verteilerausgängen 12 eines Grundverteilers 2 ein funktionsfähiges Leitungsbruchwächtermodul 7 zuzuordnen, die besonders wichtige Schmierstellen mit Schmiermittel versorgen. Beispielsweise kann auch vorgesehen sein, dass ein oder mehrere Grundverteilermodule 4 quasi als Leermodule 4 ausgebildet sind, die somit keiner Schmierstelle zugeordnet sind und auch kein entsprechendes Anschlusselement aufweisen. Im Übrigen ist in Fig. 5 noch das Verbindungselement 5 dargestellt, welches die einzelnen Grundverteilermodule 4 miteinander verbindet.

Es versteht sich, dass die modulare Ausbildung des Grundverteilers 2 hier beispielhaft ist. Selbstverständlich ist es denkbar, den Grundverteiler 2 einstückig auszubilden, d.h. die Grundverteilermodule 4 unlösbar miteinander zu verbinden. Ebenso muss der Leitungsbruchwächter 3 nicht aus einzelnen austauschbaren Leitungsbruchwächtermodulen 7 bestehen, sondern kann ebenfalls einstückig ausgebildet sein. Der Leitungsbruchwächter 3 kann dann quasi als Ganzes auf den Grundverteiler 2 aufgesetzt werden. Schließlich kann noch vorgesehen sein, dass der Leitungsbruchwächter 3 einstückig mit dem Grundverteiler 2 ausgebildet ist.

Besonders gut erkennbar sind in Fig. 5 die einzelnen Detektionseinrichtungen 31, die in jedem Leitungsbruchwächtermodul 7 vorgesehen sind. Sofern die Detektionseinrichtungen 31 elektrische Mittel aufweisen, umfassen vorzugsweise auch die Leermodule 10 entsprechende Platinen mit Leiterbahnen, so dass von einer Detektionseinrichtung 31 erzeugte Signale von einem Leitungsbruchwächtermodul 7 zum benachbarten Leitungsbruchwächtermodul, beispielsweise über einen Bus, weitergegeben werden können. Hierzu können die einzelnen Leitungsbruchwächtermodule beispielsweise über Steckverbindungen oder dergleichen verfügen. Die Signalübertragung zwischen den einzelnen Leitungsbruchwächtermodulen kann jedoch auch optisch erfolgen. Auf diese Weise können sämtliche Leitungsbruchwächtermodule 7 eines Leitungsbruchwächters 3 insbesondere über ein an dem Endstück 8c vorgesehenes Anschlussstück 37 mit einer geeigneten Auswerteinrichtung verbunden werden, welche beispielsweise die Auswertung der durch die Detektionseinrichtungen 31 erzeugten Signale durchführt. Die Detektionseinrichtungen 31 können wie gesagt auch an einen gemeinsamen Bus angeschlossen sein, so dass exakt erfasst werden kann, welches Leitungsbruchwächtermodul 7 einen Leitungsbruch meldet. Hierzu weist jedes Leitungsbruchwächtermodul 7 vorzugsweise eine Adresse auf, über die das Leitungsbruchwächtermodul 7 ansteuerbar ist. Wie oben bereits erläutert wurde, ist es auch denkbar, die Positionserfassungseinrichtung 31 optisch auszuführen. Hierzu kann beispielsweise eine Lichtschranke und geeignete Spiegelflächen in den einzelnen Leitungsbruchwächtermodulen 7 vorgesehen sein, die bei einer Verlagerung des Abtastkolbens 15 ein entsprechendes Signal auslöst, welches dem Bediener anzeigt, dass ein Druckabfall in dem entsprechenden Verteilerausgang 12 zu verzeichnen ist, der beispielsweise von einem Leitungsbruch herrühren kann.

Fig. 6 zeigt eine Explosionsdarstellung eines Leitungsbruchwächters 3 gemäß der Erfindung. Gleiche Teile sind mit gleichen Bezugszeichen versehen, so dass insofern auf die Beschreibung zu den vorangegangenen Figuren verwiesen wird, um Wiederholungen zu vermeiden.

Der Leitungsbruchwächter 3 gemäß der Darstellung nach Fig. 6 weist insgesamt vier funktionsfähige Leitungsbruchwächtermodule 7 auf, wobei unter funktionsfähig zu verstehen ist, dass diese Leitungsbruchwächter 7 tatsächlich einen Leitungsbruch in den zugeordneten Leitungen bzw. einen Druckabfall in dem Anschlusselement 9 detektieren können, also eine Detektionseinrichtung 31 aufweisen. Weiterhin ist ein Leermodul 10 vorgesehen, welches im Wesentlichen dazu dient, eine Lücke zwischen zwei funktionsfähigen Leitungsbruchwächtermodulen zu schließen und eine Signalübertragungsstrecke oder eine Kommunikationsverbindung zwischen ihnen herzustellen. Hierzu kann ein Leermodul zur Kabelführung ausgebildet sein und/oder über eigene elektrische bzw. optische Mittel zur Daten- und/oder Energieübertragung verfügen. Es wird deutlich, dass der Leitungsbruchwächter 3 zwei im Wesentlichen parallel zueinander angeordnete Reihen von Leitungsbruchwächtermodulen 7 aufweist, wobei die Anzahl der Leitungsbruchwächtermodule 7 in jeder Reihe unterschiedlich sein kann, wie es in der Ausführungsform nach Fig. 6 der Fall ist.

Um jeweils zwei benachbarte Leitungsbruchwächtermodule 7 miteinander elektrisch bzw. optisch zu verbinden, sind vorzugsweise entsprechende Verbindungsmittel vorgesehen, die in Fig. 6 beispielhaft als Steckverbinder S ausgebildet sind, die in entsprechend ausgebildeten Aufnahmen in dem benachbarten Leitungsbruchwächtermodul 7 anordenbar sind.

Weiterhin sind die einzelnen Leitungsbruchwächtermodule 7 bzw. 10 vorzugsweise mittels dreier Endstücke 8a, 8b und 8c miteinander verbunden, wobei zwischen den Endstücken 8b und 8b' gewählt werden kann. Das Endstück 8a verbindet beide Reihen der Leitungsbruchwächtermodule 7 miteinander und stellt somit quasi eine serielle Verbindung zwischen ihnen her. Die Endstücke 8b' und 8c weisen Anschlussstücke 37 auf, wobei die Anschlussstücke dazu dienen, den Leitungsbruchwächter 3 mit einer Energiequelle oder einer Rechnereinheit oder dergleichen zu verbinden. Grundsätzlich ist es ausreichend, wenn eines der Endstücke ein Anschlussstück 37 aufweist, so dass beispielsweise das Endstück 8b' durch das Endstück 8b ersetzt werden kann, welches kein Anschlussstück 37 aufweist. Selbstverständlich ist es auch denkbar dass jedes Leitungsbruchwächtermodul 7 getrennt angesteuert wird.

Sämtliche Leitungsbruchwächtermodule 7 sind über Verbindungsmittel 38, insbesondere über Schrauben miteinander verbunden, die vorzugsweise an einem der Endstücke befestigt sind und mit den entsprechenden Bohrungen 36 der Leitungsbruchwächtermodule 7 zusammenwirken. Fig. 6 macht deutlich, dass beliebig viele Leitungsbruchwächtermodule 7 bzw. Leerstücke 10 in jeder beliebigen Kombination miteinander verbindbar sind. Lediglich die Verbindungsmittel 38 müssen an die Anzahl der vorgesehenen Leitungsbruchwächtermodule 7 in ihrer Länge entsprechend angepasst werden. Sämtliche elektrisch und/oder optisch ausgebildeten Detektionseinrichtungen 31 sind vorzugsweise ebenfalls über geeignete Verbindungsmittel miteinander verbunden und über Anschlussstücke 37 entweder mit einem oder mehreren anderen Leitungsbruchwächtern und/oder mit einer Auswerteinrichtung, einer Anzeigeeinrichtung, einer Energieversorgungseinrichtung, beispielsweise einer Spannungsquelle, und dergleichen verbunden. Hierzu weist vorzugsweise wenigstens eines der Endstücke 8a, 8b bzw. 8b' oder 8c ein Anschlussstück 37 auf. Die Endstücke können zur Kabelführung dienen und/oder über sonstige Mittel zur Daten- und/oder Energieübertragung verfügen.

Die einzelnen Leitungsbruchwächter 7 bzw. deren Detektionseinrichtungen 31 können auch über einen gemeinsamen Datenbus miteinander verbunden sein. Über den gemeinsamen Bus können die Leitungsbruchwächtermodule 7 insbesondere Informationen senden, die den Zustand der zugeordneten Leitung anzeigen. Jedem Leitungsbruchwächter 7 kann weiterhin eine Adresse zugewiesen sein, so dass jedes Signal, welches über den Bus gesendet wird, eindeutig einem bestimmten Leitungsbruchwächter 7 zugeordnet werden kann. Detektiert ein Leitungsbruchwächtermodul 7 einen Leitungsbruch bzw. einen Druckabfall, so kann das daraufhin gesendete Fehlersignal von einer Auswerteinrichtung eindeutig einem bestimmten Leitungsbruchwächter 7 und der zugehörigen Leitung zugeordnet werden, sodass der Bediener sofort weiß, welche Leitung betroffen ist.

Zur Verbindung mit den Anschlusselementen 9 können verschiedene Vorspannventile 39a, 39b und 39c vorgesehen sein. Beispielsweise kann ein Vorspannventil 39a gerade ausgebildet sein. Denkbar ist auch der Einsatz eines drehbaren Vorspannventils 39b oder eines schwenkbaren Vorspannventils 39c. Die dreh- oder schwenkbar ausgeführten Vorspannventile 39b und 39c sind besonders vorteilhaft, weil dadurch auch schlecht zugängliche Schmierstellen mit Schmiermittel versorgt werden können. Derartige Vorspannventile sind aus dem Stand der Technik bekannt, so dass hier nicht näher darauf eingegangen werden soll. Entscheidend ist lediglich, dass ein Anschlusselement 9 nicht unmittelbar mit einer zugeordneten Leitung verbunden sein muss, sondern auch mit einem Vorspannventil verbunden sein kann, welches wiederum mit einer zugeordneten Leitung in Verbindung steht.

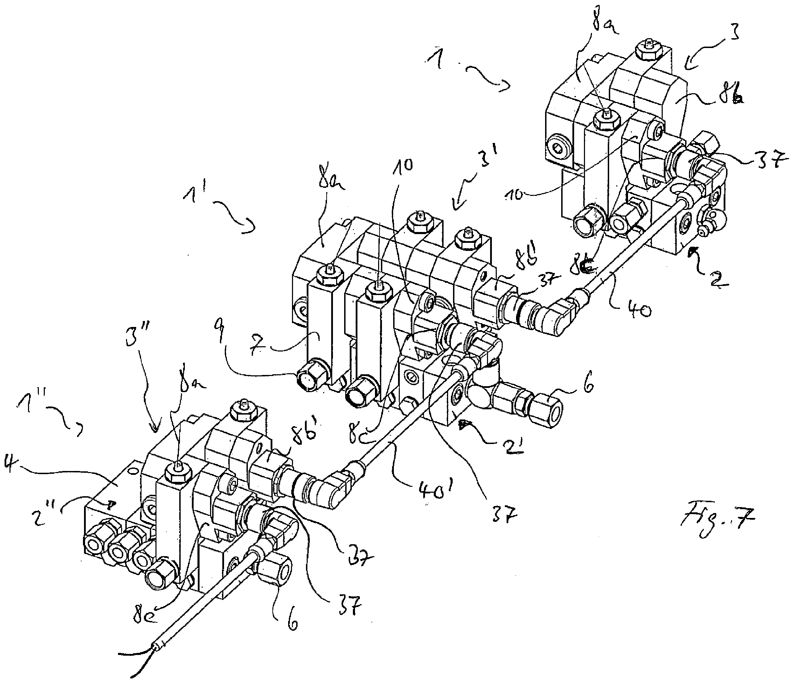

Fig. 7 zeigt eine perspektivische Darstellung eines Schmierstoffverteilersystems mit mehreren miteinander verbundenen Schmierstoffverteilern. Gleiche Teile sind mit gleichen Bezugszeichen versehen, so dass insofern auf die Beschreibung zu den vorangegangenen Figuren verwiesen wird.

In Fig. 7 sind beispielhaft insgesamt drei Schmierstoffverteiler 1, 1' und 1" vorgesehen, die über Leitungen 40 und 40' miteinander verbunden sind. Jeder Schmierstoffverteiler 1, 1', 1" weist dabei einen Leitungsbruchwächter 3, 3', 3" sowie einen Grundverteiler 2, 2', 2" auf. Jeder der Schmierstoffverteiler 1, 1' und 1" ist unterschiedlich aufgebaut, d.h. jeder Schmierstoffverteiler weist unterschiedlich ausgebildete Grundverteiler 2, 2' und 2" und Leitungsbruchwächter 3, 3' und 3" auf.

Der vorteilhafte modulare Aufbau sowohl des Grundverteilers 2 als auch des Leitungsbruchwächters 3 ist in Fig. 7 deutlich erkennbar. Durch den modularen Aufbau eines Schmierstoffverteilers 1, 1', 1" kann dieser beliebig viele Schmierstellen versorgen, nämlich dadurch, dass eine beliebige Anzahl an Grundverteilermodulen 4 und Leitungsbruchwächtermodulen 7 vorgesehen sein können und diese beliebig kombiniert werden können. Durch den vorteilhaften modularen Aufbau des Leitungsbruchwächters 3, 3' und 3" durch das beliebige Zusammenfügen der Leitungsbruchwächtermodule 7 bzw. 10 ist es darüber hinaus in vorteilhafter Weise möglich, jeden Grundverteiler 2 mit beliebig vielen Leitungsbruchwächtermodulen 7 zu versehen. Dabei ist es wie in dem Schmierstoffverteiler 1" dargestellt auch möglich, dass einzelnen Grundverteilermodulen 4 kein Leitungsbruchwächtermodul 7 zugeordnet ist.

Fig. 7 macht noch deutlich, dass die Endstücke 8a, 8b, 8b' und 8c jeweils zwei Reihen der Leitungsbruchwächtermodule 7 miteinander seriell verbinden, während eine Verbindung zwischen einzelnen Schmierstoffverteilern 1 bzw. zwischen den Leitungsbruchwächtermodulen 3 einzelne Schmierstoffverteiler 1 über Anschlussstücke 37 hergestellt werden können. Ein Schmierstoffverteiler 1, wie der Schmierstoffverteiler 1' kann beispielsweise über zwei Anschlussstücke 37 verfügen, so dass dieser mit zwei Schmierstoffverteilern 1 und 1" verbindbar ist. Falls ein Schmierstoffverteiler, wie beispielsweise der Schmierstoffverteiler 1, nur mit einem weiteren Schmierstoffverteiler 1' zu verbinden ist, so ist es ausreichend, wenn dieser nur über ein Anschlussstück 37 verfügt und die andere Reihe der Leitungsbruchwächtermodule mit einem Endstück 8b abgeschlossen wird, welches kein Anschlussstück 37 aufweist.

Wie einleitend bereits erwähnt wurde, kann der Leitungsbruchwächter einstückig mit dem Grundverteiler ausgebildet sein. Besonders vorteilhaft ist es jedoch, wenn der Leitungsbruchwächter mit dem Grundverteiler 2 lösbar verbindbar ist und der Leitungsbruchwächter 3 wenigstens ein, vorzugsweise jedoch mehrere Leitungsbruchwächtermodule 7 umfasst. Die Leitungsbruchwächtermodule 7 sind vorzugsweise scheibenförmig ausgebildet, wobei die Dicke einer Scheibe im Wesentlichen der Dicke eines Grundverteilermoduls 4 entspricht, aus denen der Grundverteiler 2 gemäß der vorliegenden Ausführungsform zusammengesetzt ist.

Durch die modulare Ausbildung des Leitungsbruchwächters 3 sind einzelne Leitungsbruchwächtermodule 7 einfach austauschbar, beispielsweise kann ein funktionsfähiges Leitungsbruchwächtermodul 7 durch ein nichtfunktionsfähiges Leitungsbruchwächtermodul 7, d.h. ein Leermodul 10 ausgetauscht werden, sofern dies notwendig ist. Auf diese Weise können beispielsweise nur wichtige Schmierstellen durch funktionsfähige Leitungsbruchwächtermodulen 7 überwacht werden. Den übrigen Schmierstellen bzw. Verteilerausgängen sind Leermodule 10 zugeordnet. Die Leitungsbruchwächtermodule 7 sind besonders bevorzugt mit einem Anschlusselement 9 des Grundverteilers 2 wirkverbunden, das in einem Verteilerausgang 12 des Grundverteilers 2 und in einer Durchgangsbohrung 13 eines Leitungsbruchmoduls 7 anordenbar ist. Vorzugsweise ist das Leitungsbruchwächtermodul 7 mittels des Anschlusselements 9 an den Grundverteiler 2 bzw. an einem einzelnen Grundverteilermodul 4 besonders einfach befestigbar.

Ein Leitungsbruchwächter 3 umfasst vorzugsweise wenigstens eine Detektionseinrichtung 31, vorzugsweise ist jedoch vorgesehen, dass jedes Leitungsbruchwächtermodul 7 eine Detektionseinrichtung 31 umfasst. Die Detektionseinrichtung 31 ist dazu ausgebildet, einen Druckabfall in einem zugeordneten Anschlusselement 9 zu detektieren und ein entsprechendes Signal zu erzeugen, welches Aufschluss über einen entsprechenden Leitungsbruch gibt. In dem in den Figuren dargestellten Ausführungsbeispiel wird ein Leitungsbruch über einen Abtastkolben 15 detektiert, der gegen die Kraft einer Feder durch den Fluiddruck in einer "Normalposition" gehalten wird, welche durch die Detektionseinrichtung, beispielsweise mittels eines elektrischen Schalters oder durch optische Mittel detektiert wird. Übersteigt die Federkraft der Feder 17 den Fluiddruck, beispielsweise weil dieser aufgrund eines Leitungsbruchs sinkt, wird der Abtastkolben 15 durch die Federkraft in Richtung des Anschlusselements 9 verlagert, so dass ein Radialelement 32 nicht mehr mit der Detektionseinrichtung 31 in Kontakt steht. Die Detektionseinrichtung wird daraufhin ein entsprechendes Signal erzeugen, welches die Verlagerung des Abtastkolbens 15 und somit den Druckabfall in dem Anschlusselement 9 anzeigt. Die Detektionseinrichtung 31 der einzelnen Leitungsbruchwächtermodule 7 sind vorzugsweise miteinander verbunden. Zu diesem Zweck weisen auch etwaige vorgesehene Leermodule 10 entsprechende elektrische und/oder optische Mittel zur Signalübertragung auf.

Besonders vorteilhaft ist es, wenn der Leitungsbruchwächter 3 modular aufgebaut ist, sodass eine beliebige Kombination von Leitungsbruchwächtermodulen 3 möglich ist. Weiterhin kann ein vorhandener Grundverteiler 2 einfach mit einem Leitungsbruchwächter 3 nachgerüstet werden, um einen erfindungsgemäßen Schmierstoffverteiler 1 zu schaffen. Das Nachrüsten kann einfach dadurch erfolgen, dass die Verteilerausgänge 12 eines Grundverteilers 2, deren zugeordnete Leitungen überwacht werden sollen, mit einem Leitungsbruchwächter 3 bzw. mit einem Leitungsbruchwächtermodul 7 versehen werden. Die Leitungsbruchwächtermodule 7 verfügen hierzu vorzugsweise über Anschlusselemente 9, die nur noch in die entsprechenden Verteilerausgänge 12 eingebracht, insbesondere eingeschraubt werden müssen. Um bestehende Grundverteiler 2 nachzurüsten, weist ein Leitungsbruchwächter 3 bzw. ein Leitungsbruchwächtermodul 7 daher vorzugsweise bereits ein entsprechendes Anschlusselement 9 auf, welches eine Öffnung 27 aufweist, um eine Fluidverbindung zwischen der den Abtastkolben 15 aufnehmenden Bohrung 16 und der Fluidkammer 23 des Anschlusselements 9 zu schaffen.

Vorzugsweise sind sämtliche in einer Zentralschmieranlage vorgesehenen Schmierstoffverteiler bzw. deren Leitungsbruchwächter 3 oder Leitungsbruchwächtermodule 7 miteinander verbunden und an ein entsprechendes Auswertsystem, welches in der Zeichnung nicht dargestellt ist, angeschlossen. Auf diese Weise kann einem Bediener beispielsweise durch ein Anzeigeelement angezeigt werden, welches der Leitungsbruchwächtermodule 7 einen Leitungsbruch detektiert hat. Dadurch, dass bei einer Verbindung der einzelnen Leitungsbruchwächtermodule 7 über einen gemeinsamen Bus jedes einzelne Leitungsbruchwächtermodul 7 adressiert werden kann, ist ein schnelles Auffinden des betroffenen Leitungsbruchwächtermoduls 7 und damit der zugeordneten Leitung möglich.

Gemäß der Erfindung kann der Leitungsbruchwächter 30 in dem Grundverteiler 2 oder an diesem angeordnet sein. Denkbar ist es beispielsweise, den Leitungsbruchwächter 3 in den Grundverteiler 2 zu integrieren. Zum Nachrüsten von bereits bestehenden Grundverteilern 2 ist es jedoch vorteilhafter, den Leitungsbruchwächter 3 an dem Grundverteiler 2 anzuordnen, und ihn insbesondere über Anschlusselemente 9 mit dem Grundverteiler 2 zu verbinden.

### Bezugszeichenliste

- 1-1": Schmierstoffverteiler
- 2-2": Grundverteiler
- 3-3": Leitungsbruchwächter
- 4: Grundverteilermodul
- 4': Anfangsmodul
- 5: Verbindungselement
- 6: Einlasselement
- 7: Leitungsbruchwächtermodul
- 8a-8c: Endstück
- 9: Anschlusselement
- 10: Leermodul
- 11: Bohrung
- 12: Verteilerausgang
- 13: Durchgangsbohrung
- 14: Seitenfläche
- 15: Abtastkolben
- 16: Bohrung
- 17: Feder
- 18: Oberseite
- 19: Vorsprung
- 19': Vorsprung
- 20: Anschlagelement
- 21: Oberseite
- 22: Pfeil
- 23: Fluidkammer
- 23': Fluidkammer
- 24: Verschluss
- 25: elastisches Element
- 26: Verschlusselement
- 27: Öffnung
- 28: Bohrungsabschnitt
- 29: Stirnseite
- 30: Entlastungsbohrung
- 31: Detektionseinrichtung
- 32: Radialelement
- 33: Hohlraum
- 34: Platine
- 36: Bohrung
- 37: Anschlussstück
- 38: Verbindungsmittel
- 39a: Vorspannventil
- 39b: Vorspannventil
- 39c: Vorspannventil
- 40: Leitung
- 40': Leitung
- S: Steckverbindung
- K: Kontaktelement

## Patentansprüche

1. Schmierstoffverteiler (1), insbesondere zur Verwendung in Zentralschmieranlagen für Maschinen, Fahrzeuge, Bau- oder Landmaschinen zum Fördern und Verteilen von Schmierstoff aus einer Schmierstoffquelle über ein oder mehrere Leitungen an vorbestimmte Schmierstoffabnahmestellen, aufweisend einen Grundverteiler (2), wobei der Schmierstoffverteiler (1) mindestens einen Leitungsbruchwächter (3) zur Detektion eines Druckabfalls in mindestens einer Leitung aufweist, und wobei der mindestens eine Leitungsbruchwächter (3) baulich in oder an dem Grundverteiler (2) angeordnet ist, um eine starre Einheit umfassend den Grundverteiler (2) und den Leitungsbruchwächter (3) zu schaffen, **dadurch gekennzeichnet, dass** der mindestens eine Leitungsbruchwächter (3) wenigstens ein Leitungsbruchwächtermodul (7) umfasst, wobei das Leitungsbruchwächtermodul (7) in Wirkverbindung mit einem Anschlusselement (9) steht, das einem Verteilerausgang (12) des Grundverteilers (2) zugeordnet ist, und dass der Leitungsbruchwächter (3) wenigstens eine Detektionseinrichtung (31) aufweist, wobei die Detektionseinrichtung (31) dazu ausgebildet und eingerichtet ist, unter Einsatz elektrischer und/oder optischer Komponenten einen Druckabfall in einem Anschlusselement (9) zu detektieren, wobei das Anschlusselement (9) so ausgebildet ist, dass der Schmierstoff aus dem Verteilerausgang (12) heraus über einen Umleitungsfluidpfad geleitet wird, wobei der Umleitungsfluidpfad gebildet ist durch eine Öffnung (27) in der Wandung des Anschlusselements (9), sowie einen Bohrungsabschnitt (28) und eine Entlastungsbohrung (30) in dem Leitungsbruchwächtermodul (7), wobei der Bohrungsabschnitt (28) an einem Ende mit der Öffnung (27) in Fluidverbindung steht und an dem anderen Ende mit der Entlastungsbohrung (30) verbunden ist.

2. Schmierstoffverteiler nach Anspruch 1, **dadurch gekennzeichnet, dass** der mindestens eine Leitungsbruchwächter (3) einstückig mit dem Grundverteiler (2) ausgebildet ist.

3. Schmierstoffverteiler nach Anspruch 1, **dadurch gekennzeichnet, dass** der mindestens eine Leitungsbruchwächter (3) mit dem Grundverteiler (2) lösbar verbindbar ist.

4. Schmierstoffverteiler nach Anspruch 1, **dadurch gekennzeichnet, dass** das Leitungsbruchwächtermodul (7) scheibenförmig ausgebildet ist.

5. Schmierstoffverteiler nach einem der vorhergehenden Ansprüche, **dadurch gekennzeichnet, dass** der Leitungsbruchwächter (3) mindestens ein Leermodul aufweist.

6. Schmierstoffverteiler nach Anspruch 1, **dadurch gekennzeichnet, dass** jedem Verteilerausgang (12) des Grundverteilers (2) ein Leitungsbruchwächtermodul (7) zugeordnet ist.

7. Schmierstoffverteiler nach einem der vorhergehenden Ansprüche, **dadurch gekennzeichnet, dass** der Grundverteiler (2) als Progressivverteiler ausgebildet ist.

8. Schmierstoffverteiler nach einem der Ansprüche 1 bis 7, **dadurch gekennzeichnet, dass** ein Leitungsbruchwächtermodul (7) einen in einer Bohrung (16) gegen die Kraft einer Feder (17) beweglich gelagerten Abtastkolben (15) umfasst.

9. Schmierstoffverteiler nach Anspruch 8, **dadurch gekennzeichnet, dass** die Position des Abtastkolbens (15) in der Bohrung (16) von dem Fluiddruck in einem zugeordneten Anschlusselement (9) abhängt.

10. Zentralschmieranlage für Maschinen, Fahrzeuge, Bau- oder Landmaschinen, aufweisend einen Schmierstoffverteiler (1) nach einem der Ansprüche 1 bis 11.

11. Schmierstoffverteiler (1) nach einem der Ansprüche 1 bis 9, **dadurch gekennzeichnet, dass** das Leitungsbruchwächtermodul (7) eine Durchgangsbohrung (13) zur Aufnahme eines Anschlusselements (9) aufweist, welches die Durchgangsbohrung (13) zur Verbindung des Leitungsbruchwächters (3) mit dem Grundverteiler (2) durchdringt, wobei das Anschlusselement (9) in dem Verteilerausgang (12) des Grundverteilers (2) angeordnet ist, um eine Fluidverbindung mit den zu versorgenden Schmierstoffabnahmestellen herzustellen.

## Claims

1. A lubricant distributor (1), in particular for use in central lubricating systems for machines, vehicles, construction machines, or agricultural machines, for conveying and distributing lubricant from a lubricant source via one or more lines to predetermined lubricant delivery points, comprising a basic distributor (2), wherein the lubricant distributor (1) comprises at least one line break monitor (3) for detecting a pressure drop in at least one line, and wherein the at least one line break monitor (3) is structurally arranged in or on the basic distributor (2) in order to create a rigid unit comprising the basic distributor (2) and the line break monitor (3), **characterized in that** the at least one line break monitor (3) comprises at least one line break monitor module (7), wherein the line break monitor module (7) is operatively connected to a connection element (9) assigned to a distributor outlet (12) of the basic distributor (2), and **in that** the line break monitor (3) comprises at least one detection means (31), wherein the detection means (31) is configured and arranged for detecting a pressure drop in a connection element (9) using electrical and/or optical components, wherein the connection element (9) is configured such that lubricant is guided out of the distributor outlet (12) via a bypass fluid path, wherein the bypass fluid path is formed by an opening (27) in the wall of the connection element (9) and a bore section (28) and a relief bore (30) in the line break monitor module (7), wherein the bore section (28) is in fluid communication with the opening (27) at one end and is connected with the relief bore (30) at the other end.

2. The lubricant distributor according to claim 1, **characterized in that** the at least one line break monitor (3) is formed in one piece with the basic distributor (2).

3. The lubricant distributor according to claim 1, **characterized in that** the at least one line break monitor (3) is releasably connectable to the basic distributor (2).

4. The lubricant distributor according to claim 1, **characterized in that** the line break monitor module (7) is formed to be disk-shaped.

5. The lubricant distributor according to anyone of the preceding claims, **characterized in that** the line break monitor (3) comprises at least one empty module.

6. The lubricant distributor according to claim 1, **characterized in that** each distributor outlet (12) of the basic distributor (2) is assigned a line break monitor module (7).

7. The lubricant distributor according to anyone of the preceding claims, **characterized in that** the basic distributor (2) is formed as a progressive distributor.

8. The lubricant distributor according to anyone of claims 1 to 7, **characterized in that** a line break monitor module (7) includes a sensing plunger (15) which is mounted within a bore (16) to be movable against the force of a spring (17).

9. The lubricant distributor according to claim 8, **characterized in that** the position of the sensing plunger (15) in the bore (16) depends on the fluid pressure within an associated connection element (9).

10. A central lubricating system for machines, vehicles, construction machines or agricultural machines, comprising a lubricant distributor (1) according to anyone of claims 1 to 11.

11. The lubricant distributor (1) according to anyone of claims 1 to 9, **characterized in that** the line break monitor module (7) comprises a through-bore (13) for receiving a connection element (9), which penetrates the through-bore (13) for connecting the line break monitor (3) to the basic distributor (2), wherein the connection element (9) is disposed in the distributor outlet (12) of the basic distributor (2) in order to establish fluid communication with the lubricant delivery points to be supplied.

## Revendications

1. Distributeur de lubrifiant (1), en particulier destiné à être utilisé dans des installations de lubrification centrales pour machines, véhicules, engins de chantier ou engins agricoles pour l'acheminement et la distribution de lubrifiant à partir d'une source de lubrifiant via une ou plusieurs conduites à des points de soutirage de lubrifiant prédéterminés, présentant un distributeur de base (2), sachant que le distributeur de lubrifiant (1) présente au moins un détecteur de rupture de conduite (3) pour la détection d'une chute de pression dans au moins une conduite, et sachant que l'au moins un détecteur de rupture de conduite (3) est disposé structurellement dans ou contre le distributeur de base (2) pour réaliser une unité rigide comprenant le distributeur de base (2) et le détecteur de rupture de conduite (3), **caractérisé en ce que** l'au moins un détecteur de rupture de conduite (3) comprend au moins un module de détecteur de rupture de conduite (7), sachant que le module de détecteur de rupture de conduite (7) est en interaction avec un élément de raccordement (9) qui est associé à une sortie de distributeur (12) du distributeur de base (2), et **en ce que** le détecteur de rupture de conduite (3) présente au moins un dispositif de détection (31), sachant que le dispositif de détection (31) est constitué et configuré pour détecter une chute de pression dans un élément de raccordement (9) moyennant des composants électriques et/ou optiques, sachant que l'élément de raccordement (9) est constitué de telle façon que le lubrifiant soit guidé à partir de la sortie de distributeur (12) via un chemin de fluide de déviation, sachant que le chemin de fluide de déviation est formé par une ouverture (27) dans la paroi de l'élément de raccordement (9), ainsi qu'une section d'alésage (28) et un alésage de détente (30) dans le module de détecteur de rupture de conduite (7), sachant que la section d'alésage (28) est en liaison fluidique avec l'ouverture (27) à une extrémité et reliée à l'alésage de détente (30) à l'autre extrémité.

2. Distributeur de lubrifiant selon la revendication 1, **caractérisé en ce que** l'au moins un détecteur de rupture de conduite (3) est constitué d'une pièce avec le distributeur de base (2).

3. Distributeur de lubrifiant selon la revendication 1, **caractérisé en ce que** l'au moins un détecteur de rupture de conduite (3) est apte à être relié de façon détachable au distributeur de base (2).

4. Distributeur de lubrifiant selon la revendication 1, **caractérisé en ce que** le module de détecteur de rupture de conduite (7) est constitué en forme de disque.

5. Distributeur de lubrifiant selon l'une des revendications précédentes, **caractérisé en ce que** le détecteur de rupture de conduite (3) présente au moins un module vide.

6. Distributeur de lubrifiant selon la revendication 1, **caractérisé en ce qu'**un module de détecteur de rupture de conduite (7) est associé à chaque sortie de distributeur (12) du distributeur de base (2).

7. Distributeur de lubrifiant selon l'une des revendications précédentes, **caractérisé en ce que** le distributeur de base (2) est constitué comme distributeur progressif.

8. Distributeur de lubrifiant selon l'une des revendications 1 à 7, **caractérisé en ce qu'**un module de détecteur de rupture de conduite (7) comprend un piston de balayage (15) logé de façon mobile dans un alésage (16) contre la force d'un ressort (17).

9. Distributeur de lubrifiant selon la revendication 8, **caractérisé en ce que** la position du piston de balayage (15) dans l'alésage (16) dépend de la pression de fluide dans un élément de raccordement (9) associé.

10. Installation de lubrification centrale pour machines, véhicules, engins de chantier ou engins agricoles, présentant un distributeur de lubrifiant (1) selon l'une des revendications 1 à 11.

11. Distributeur de lubrifiant (1) selon l'une des revendications 1 à 9, **caractérisé en ce que** le module de détecteur de rupture de conduite (7) présente un alésage traversant (13) pour le logement d'un élément de raccordement (9), lequel traverse l'alésage traversant (13) pour relier le détecteur de rupture de conduite (3) au distributeur de base (2), sachant que l'élément de raccordement (9) est disposé dans la sortie de distributeur (12) du distributeur de base (2) pour réaliser une liaison fluidique avec les points de soutirage de lubrifiant à desservir.
